# EUROPEAN PATENT APPLICATION

(11) **EP 4 513 857 A1**
(43) Date of publication of application: **26.02.2025**
(21) Application number: 23193138.7
(22) Date of filing: 24.08.2023
(51) Int. Cl.: H04L 67/02, H04L 67/12

(54) **CONTROL ENTITY AND METHOD FOR HANDLING AN ERROR OF A HOUSEHOLD APPLIANCE**

(71) Applicant: BSH Hausgeräte GmbH, 81739 München (DE)
(72) Inventor: Aguado Munoz, Sergio, 85521 Ottobrunn (DE); Imialek, Marek, 81825 München (DE)

(57) **Abstract**

A control entity (111, 130) for managing an error of a household appliance (110) is described. The control entity (111, 130) is configured to determine that an error of the household appliance (110) has occurred. Furthermore, the control entity (111, 300) is configured to provide a notification (137) to the user equipment (140) of a user of the household appliance (110); wherein the notification (137) comprises a link (201) to a booking center for booking a repair intervention for repairing the household appliance (110).

## Description

The present document relates to a method and a corresponding control entity for handling an error of a household appliance.

During operation of a household appliance, such as a washing machine, a dishwasher or a refrigerator, an error may occur, and a corresponding error message may be indicated on the display of the household appliance. A user of the household appliance may not know how to react to the error message, thereby creating an uncomfortable situation for the user.

The present document addresses the technical problem of increasing the comfort of use of a household appliance in conjunction with an erroneous operation of the household appliance. The technical problem is solved by each of the independent claims. Preferred examples are described in the dependent claims.

According to an aspect, a control entity for managing an error of a household appliance is described. Example household appliances are: a dishwasher, an oven, a kitchen machine, a coffee maker, a washing machine, a dryer, a hob, etc. The control entity may be a control unit comprised within the household appliance. Alternatively, the control entity may be a backend unit (e.g., a server) which is external to the household appliance and which is in communication with the household appliance via a communication link (such as LAN, WLAN, 3G, 4G or 5G).

The control entity is configured to determine that an error of the household appliance has occurred. This may be detected based on events that have been logged within an event storage of the household appliance. As indicated above, the control entity may be an external backend unit. In such as case, the control entity, i.e., the backend unit, may be configured to receive an error message which is indicative of the error of the household appliance via the communication link between the household appliance and the backend unit.

The control entity may be configured to analyze the error of the household appliance, in particular using a pre-determined rule engine, to determine whether or not a repair intervention is required for repairing the household appliance. The rule engine may comprise an expert system (e.g., an expert system based on artificial intelligence).

The control entity is further configured to provide a notification to a user equipment (e.g., to a smartphone) of a user of the household appliance. The notification may comprise (or may be) an email and/or a notification of a software application running on the user equipment. The notification may be sent to the user equipment via a communication link (between the control entity and the user equipment), such as LAN, WLAN, 3G, 4G or 5G.

The notification may comprise a link to a booking center for booking a repair intervention for repairing the household appliance. In particular, the control entity may be configured to provide the link to the booking center within the notification, if (possibly only if) it is determined that a repair intervention is required. The link may be a hyperlink and/or a weblink (e.g., a weblink to a website of the booking center).

Hence, a control entity is described, which allows an error of a household appliance to be solved in an efficient and reliable manner.

As indicated above, the link may be a weblink to a booking website of the booking center. The booking website may comprise at least one field that needs to be filled in when booking a repair intervention. Typically, the website comprises a plurality of fields that need to be filled in. Example fields are
- an appliance field to be filled with the appliance identifier of the household appliance;
- a user field to be filled with the user identifier, the name and/or the address of the user of the household appliance; and/or
- an error field to be filled with the error code and/or a description of the error of the household appliance.

The control entity may be configured to determine information that is to be filled in the at least one field (in particular into the plurality of fields) of the booking website. The information may be determined using the rule engine and/or the event engine. The control entity may be further configured to generate a link to the booking website which causes the at least one field, in particular the plurality of fields, to be filled automatically with the determined information.

Hence, the link may enable the user to book a repair intervention in a particularly efficient and comfortable manner.

The control entity may be configured to determine that a repair intervention for repairing the household appliance has been requested or booked by the user. Furthermore, the control entity may be configured to analyze the error of the household appliance, in particular using the pre-determined rule engine, to determine one or more spare parts, which are needed for the repair intervention. In addition, the control entity may be configured to automatically send an order for the one or more spare parts to a service warehouse. By doing this, it may be ensured that the repair intervention is successful, thereby further increasing the comfort for the user of the household appliance. The spare parts may be sent to the service workforce, especially the booked service expert, or the customer directly. When the spare parts are delivered to the customer, they may be accompanied with repair instructions, which allow the customer to repair the household appliance on his own. This approach may be especially suitable for repair procedures, which can easily be executed and/or which are not critical for the safety of the household appliance.

The control entity may be configured to analyze the error of the household appliance, in particular using the pre-determined rule engine, to determine a recommendation on how to handle the error of the appliance. The recommendation may comprise one or more actions that should be taken by the user for removing and/or for solving the error of the household appliance. The recommendation may be provided within the notification. By providing an explicit recommendation to the user, the comfort for the user may be further increased.

The control entity may be configured to add a link (e.g., a hyperlink and/or a weblink) to the recommendation, which enables the user to initiate a software update of software of the household appliance, and/or to order one or more spare parts for repairing the household appliance. By doing this, the comfort for the user may be further increased.

The control entity may be configured to determine an appliance identifier of the erroneous household appliance (which may be comprised within the error message). Furthermore, the control entity may be configured to determine a user identifier of the user and/or of the user equipment based on the appliance identifier using an event engine, wherein the event engine comprises a mapping between a plurality of different appliance identifiers and a plurality of different user identifiers. By making use of a separate event engine, data security may be improved, thereby further increasing the comfort for the user of the household appliance.

According to a further aspect, a method for managing an error of a household appliance is described. The method comprises determining that an error of the household appliance has occurred. Furthermore, the method comprises providing a notification to the user equipment of a user of the household appliance, wherein the notification comprises a link to a booking center for booking a repair intervention for repairing the household appliance.

It should be noted that the methods and systems including their preferred embodiments as outlined in the present document may be used stand-alone or in combination with the other methods and systems disclosed in this document. In addition, the features outlined in the context of a system are also applicable to a corresponding method and vice versa. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
- Figure 1: shows an example system for handling an error of a household appliance;
- Figure 2: shows an example error notification; and
- Figure 3: shows a flow chart of an example method for handling an error of a household appliance.

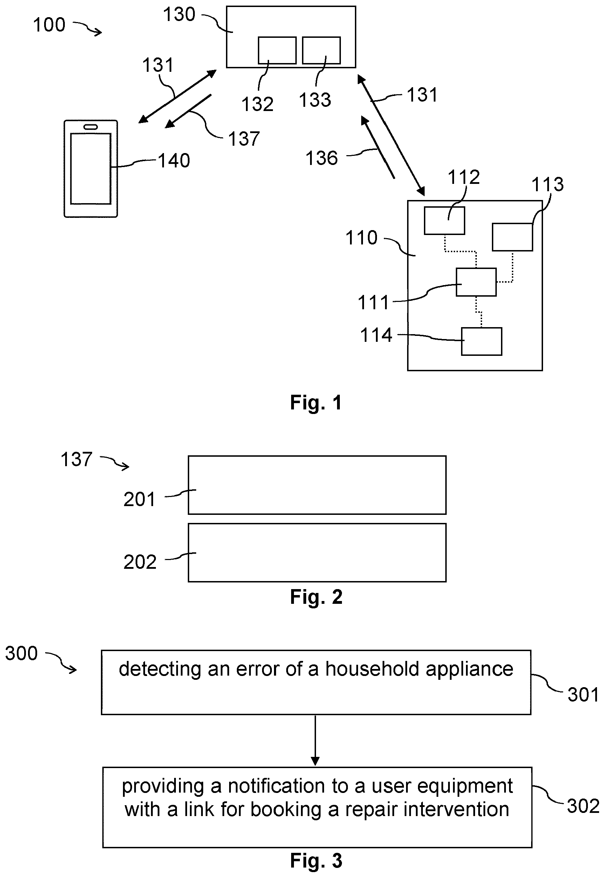

As outlined above, the present document is directed at increasing the comfort-of-use of a household appliance with regard to handling an error of the household appliance. In this context, Fig. 1 shows a system 100, which comprises at least one household appliance 110. The household appliance 110 typically comprises one or more operating units 114 (such as an electrical motor, a power supply, etc.) which may cause an error of the household appliance 110. By way of example, an electronic component of an operating unit 114 may be faulty, thereby causing an error of the household appliance 110.

A control unit 111 of the household appliance 110 may detect the error and may provide an error message on a user interface 113, e.g., on a display, of the household appliance 110. The error may e.g. be detected using certain sensors or by analyzing current waves of electrical energy with is supplied to certain actuators likes motors, pumps, heating elements etc. The error message may e.g., comprise an error code (e.g., a combination of letters and/or numerals) which identifies the error that has occurred. The user of the household appliance 110 may use this error code to find out more about the error (e.g., by reading the user manual of the household appliance 110 and/or by performing a search in the internet). This may be a rather uncomfortable task for the user.

The household appliance 110 may comprise a communication unit 112 which is configured to communicate with an external backend unit 130, notably a backend-server, via a (wireless) communication link 131 (e.g., via LAN, WLAN, 3G, 4G or 5G). In particular, an error message 136, which is indicative of the error that has occurred may be sent to the backend unit 130 via the communication link 131.

The backend unit 130 may be configured to provide a notification 137 to a user equipment 140 (such as a smartphone) of a user of the household appliance 110 via a (wireless) communication link 131 between the backend unit 130 and the user equipment 140. The notification 137 may be indicative of the fact that an error of the household appliance 110 has occurred. Furthermore, the notification 137 may be indicative of the error code of the error.

The backend unit 130 may comprise a rule engine 132, which is configured to analyze the error of the household appliance 110 (wherein the error is indicated by the error message 136). In particular, the rule engine 132 may be configured to determine one or more actions, which need to be performed to remove and/or to solve the error and/or to repair the household appliance 110. For this purpose, the rule engine 132 may make use
- of an expert system (e.g., an expert system which is based on artificial intelligence);
- a search of the internet;
- a known error list and/or
- the user manual of the household appliance 110.

Hence, a recommendation may be determined, wherein the recommendation may comprise one or more actions that may need to be taken for removing the error of the household appliance 110.

The error message 136 may be provided along with an appliance identifier for the household appliance 110. The backend unit 130 may comprise an event engine 133, which is configured to map the appliance identifier to a user identifier which identifies the user and/or the user equipment. The user identifier may be used to determine the email address of the user. The notification 137 may then be sent to the email address of the user.

When analyzing the error of the household appliance 110, it may be determined that the error may need to be handled by a professional repair and/or maintenance center. The notification 137, which is sent to the user equipment 140 and/or to the email address of the user of the household appliance 110 may comprise a weblink which enables the user to open the website for booking a repair date for repairing the household appliance 110. The website may be opened simply by clicking onto the link, which is comprised within the notification 137.

Fig. 2 shows an example notification 137, notably an email, which comprises a link 201 to a website for booking a repair intervention for repairing the household appliance 110. Furthermore, the notification 137 may comprise a recommendation 202 for the user on how to address the error of the household appliance 110. The recommendation 202 may comprise one or more actions that may be taken by the user to remove the error of the household appliance 110 (possibly without the need of a repair intervention by a technician).

Hence, a pro-active communication regarding an error of a household appliance 110 is described. The user of the household appliance 110 may receive a notification 137, in particular an email, which comprises focussed information (notably a recommendation 202) on whether to repair or to exchange the appliance 110. The notification 137 allows reducing the breakdown time of the appliance 110. By providing a link 201 to the booking center for booking a repair intervention of the appliance 110, an efficient and flexible handling of an error of the appliance 110 may be achieved.

The notification 137 may further comprise expert information regarding the error of the appliance 110. The expert information may be provided automatically to the repair center when booking the repair intervention. By way of example, the booking website may comprise a list of fields that need to be filled in, when booking a repair intervention. The different fields may comprise
- the identifier of the appliance 110;
- the identifier, the name and/or the address of the user;
- the error code of the error of the appliance 110; and/or
- a description of the error of the appliance 110.

The link 201, which is provided within the notification 137, may be such that one or more of the fields, in particular all of the fields, of the booking website are automatically filled in with the correct information. As a result of this, a particularly efficient and comfortable booking of a repair intervention may be achieved.

The household appliance 110 may have an internal storage for storing all the events that are generated while operating the appliance 110. If one of these events is an error, the appliance 110 may send this information (within an error message 136) to the backend unit 130 immediately or as soon as the appliance 110 establishes a network connection (i.e., a communication link 131).

In order to provide a fast response time to the user of the appliance 110, a proactive email 137 for booking a repair intervention may be sent to the user equipment 140 of the user.

A rule engine 132 may be used to check the errors of one or more different appliances 110. The rule engine 132 may check continuously the newly received events, and the rule engine 132 may validate the prefix of each event code against a defined error prefix pattern. If the event prefix matches with the pattern, then the rule engine 132 may trigger an error. If it is determined that the triggered error is reparable, the process may be continued.

The rule engine 132 may analyse the information available from different events, and it may be configured to identify the right solution according to one or more pre-defined algorithms. The rule engine 132 may apply different algorithms to the different data segments one by one to deliver the right diagnostic (e.g., starting with the product category, the group and/or type of appliances, and specific data information (such as the error, the temperature, the working time, etc.). Each of these data segments may contribute to increasing the accuracy of the diagnostic and the solution to be applied.

An event engine 133 may be used to match different appliances 110 with different users. Due to data privacy, data may be stored related to the appliance ID (identifier) of an appliance 110 (without any reference to the user of the appliance 110). The event engine 133 may be configured to connect specific appliance IDs with specific user IDs.

Once the user ID of the user of the erroneous appliance 110 has been identified, a notification 137 may be sent to the identified user (e.g., taking into account the country and/or language of the user, and/or the purchase date and/or the contract terms of the purchase of the household appliance 110).

A front-end system may be used to handle the proactive communication with the user, e.g., via an email or via a notification within a Software Application or via SMS. The link 201 enables the user to book the repair intervention with just one click. The user may only be required to confirm his/her identity, his/her address and/or the desired date for the repair intervention.

A notification 137, in particular an email, with information about the error and the conditions of the repair may be provided to the user. The user may start the booking process by using (i.e., by clicking on) the link 201 The booking process may already include the information related to the diagnostics of the error, of the appliance 110 and/or of the user.

After clicking on the link 201, the link 201 opens a web page (from the booking service). The web page prefills the relevant information using the data comprised within the notification 137, such as the appliance ID and the error. Subsequently, the user may confirm the time and date proposal for the repair intervention and/or the personal information (address, telephone, etc.). The process may end by sending the repair confirmation to the user and by storing the repair intervention date, the error code and the user identification in the system of the repair service center.

The backend unit 130 may be configured to send a notification 137 for a particular error of a particular appliance 110 only once. In other words, multiple notifications 137 for the same error may be suppressed, thereby further increasing the comfort of the user.

There may be a further communication with the service warehouse, which relates to the diagnostic of the particular appliance 110 and the user. This communication enables the technician to receive the right spare parts for repairing the appliance 110. Based on the diagnostic, the system 100 may automatically provide the technical with the one or more required parts, thereby further increasing the efficiency of the repair intervention.

The recommendation 202 within the notification 137 may suggest performing a software update for solving the technical problem of the appliance 110. The rule engine 132 may determine that the solution for the error is a software update of the appliance 110. The user may accept the proposal for performing a software update, and subject to accepting the proposal, the software update may be performed automatically.

Alternatively, or in addition, the recommendation 202 may comprise one or more self-help actions (which may be performed by the user alone, without the need of a technician). The notification 137 may include a link to order one or more required parts for repairing the appliance 110. The link may enable the user to order the one or more parts in an efficient manner.

Fig. 3 shows a flow chart of a (possibly computer-implemented) method 300 for managing an error of a household appliance 110. The method 300 may be performed by the control unit 111 of the household appliance 110 and/or by a backend unit 130.

The method 300 comprises determining 301 that an error of the household appliance 110 has occurred. This may be indicated within an error message 136 that has been issued by the household appliance 110.

Furthermore, the method 300 comprises providing 302 a notification 137 (notably an email) to a user equipment 140 (e.g., a smartphone) of the user of the household appliance 110. The notification 137 comprises a link 201 (notably a hyperlink and/or a weblink) to a booking center for booking a repair intervention for repairing the household appliance 110. By doing this, a comfortable and efficient troubleshooting of the error of the household appliance 110 may be achieved.

It should be noted that the description and drawings merely illustrate the principles of the proposed methods and systems. Those skilled in the art will be able to implement various arrangements that, although not explicitly described or shown herein, embody the principles of the invention and are included within its spirit and scope as defined by the appended claims. Furthermore, all examples and embodiments outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A control entity (111, 130) for managing an error of a household appliance (110);
wherein the control entity (111, 130) is configured to
- determine that an error of the household appliance (110) has occurred; and
- provide a notification (137) to a user equipment (140) of a user of the household appliance (110); wherein the notification (137) comprises a link (201) to a booking center for booking a repair intervention for repairing the household appliance (110).

2. The control entity (111, 130) of claim 1, wherein the control entity (111, 130) is configured to
- analyze the error of the household appliance (110), in particular using a pre-determined rule engine (132), to determine whether or not a repair intervention is required; and
- provide the link (201) to the booking center within the notification (137), if it is determined that a repair intervention is required.

3. The control entity (111, 130) of any previous claims, wherein
- the link (201) is a weblink to a booking website;
- the booking website comprises at least one field that needs to be filled in when booking a repair intervention; and
- the control entity (111, 130) is configured to
- determine information that is to be filled in the at least one field of the booking website; and
- generate a link (201) to the booking website which causes the at least one field to be filled automatically with the determined information.

4. The control entity (111, 130) of claim 3, wherein the at least one field comprises
- an appliance field to be filled with an appliance identifier of the household appliance (110);
- a user field to be filled with a user identifier, a name and/or an address of the user of the household appliance (110); and/or
- an error field to be filled with an error code and/or a description of the error of the household appliance (110).

5. The control entity (111, 130) of any previous claims, wherein the control entity (111, 130) is configured to
- determine that a repair intervention for repairing the household appliance (110) has been requested or booked by the user;
- analyze the error of the household appliance (110), in particular using a pre-determined rule engine (132), to determine one or more spare parts which are needed for the repair intervention; and
- automatically send an order for the one or more spare parts to a service warehouse.

6. The control entity (111, 130) of any previous claims, wherein the control entity (111, 130) is configured to
- analyze the error of the household appliance (110), in particular using a pre-determined rule engine (132), to determine a recommendation (201) on how to handle the error of the appliance (110); wherein the recommendation (201) comprises in particular one or more actions that should be taken by the user for removing the error of the household appliance (110); and
- provide the recommendation (201) within the notification (137).

7. The control entity (111, 130) of claim 6, wherein the control entity (111, 130) is configured to add a link to the recommendation (201), which enables the user to
- initiate a software update of software of the household appliance (110);
and/or
- order one or more spare parts for repairing the household appliance (110).

8. The control entity (111, 130) of any previous claims, wherein the control entity (111, 130) is configured to
- determine an appliance identifier of the erroneous household appliance (110); and
- determine a user identifier of the user and/or of the user equipment (140) based on the appliance identifier using an event engine (133) which comprises a mapping between a plurality of different appliance identifiers and a plurality of different user identifiers.

9. The control entity (111, 130) of any previous claims, wherein the notification (137) comprises an email and/or a notification of a software application running on the user equipment (140).

10. The control entity (111, 130) of any previous claims, wherein the control entity (130) is configured to
- receive an error message (136) which is indicative of the error of the household appliance (110) via a communication link (131), and
- send the notification (137) to the user equipment (140) via a communication link (131).

11. A method (300) for managing an error of a household appliance (110); wherein the method (300) comprises,
- determining (301) that an error of the household appliance (110) has occurred; and
- providing (302) a notification (137) to a user equipment (140) of a user of the household appliance (110); wherein the notification (137) comprises a link (201) to a booking center for booking a repair intervention for repairing the household appliance (110).

## Amended claims

### Amended claims in accordance with Rule 137(2) EPC.

1. A control entity (111, 130) for managing an error of a household appliance (110);
wherein the control entity (111, 130) is configured to
- determine that an error of the household appliance (110) has occurred;
- provide a notification (137) to a user equipment (140) of a user of the household appliance (110); wherein the notification (137) comprises a link (201) to a booking center for booking a repair intervention for repairing the household appliance (110); wherein the link (201) is a weblink to a booking website; wherein the booking website comprises at least one field that needs to be filled in when booking a repair intervention;
- determine an appliance identifier of the erroneous household appliance (110);
- determine a user identifier of the user and/or of the user equipment (140) based on the appliance identifier using an event engine (133) which comprises a mapping between a plurality of different appliance identifiers and a plurality of different user identifiers;
- determine information that is to be filled in the at least one field of the booking website; wherein the at least one field comprises an appliance field to be filled with the appliance identifier of the household appliance (110) and a user field to be filled with the user identifier; and
- generate a link (201) to the booking website which causes the at least one field to be filled automatically with the determined information.

2. The control entity (111, 130) of claim 1, wherein the control entity (111, 130) is configured to
- analyze the error of the household appliance (110), in particular using a pre-determined rule engine (132), to determine whether or not a repair intervention is required; and
- provide the link (201) to the booking center within the notification (137), if it is determined that a repair intervention is required.

3. The control entity (111, 130) of any previous claims, wherein the at least one field comprises an error field to be filled with an error code and/or a description of the error of the household appliance (110).

4. The control entity (111, 130) of any previous claims, wherein the control entity (111, 130) is configured to
- determine that a repair intervention for repairing the household appliance (110) has been requested or booked by the user;
- analyze the error of the household appliance (110), in particular using a pre-determined rule engine (132), to determine one or more spare parts which are needed for the repair intervention; and
- automatically send an order for the one or more spare parts to a service warehouse.

5. The control entity (111, 130) of any previous claims, wherein the control entity (111, 130) is configured to
- analyze the error of the household appliance (110), in particular using a pre-determined rule engine (132), to determine a recommendation (201) on how to handle the error of the appliance (110); wherein the recommendation (201) comprises in particular one or more actions that should be taken by the user for removing the error of the household appliance (110); and
- provide the recommendation (201) within the notification (137).

6. The control entity (111, 130) of claim 5, wherein the control entity (111, 130) is configured to add a link to the recommendation (201), which enables the user to
- initiate a software update of software of the household appliance (110); and/or
- order one or more spare parts for repairing the household appliance (110).

7. The control entity (111, 130) of any previous claims, wherein the notification (137) comprises an email and/or a notification of a software application running on the user equipment (140).

8. The control entity (111, 130) of any previous claims, wherein the control entity (130) is configured to
- receive an error message (136) which is indicative of the error of the household appliance (110) via a communication link (131), and
- send the notification (137) to the user equipment (140) via a communication link (131).

9. A method (300) for managing an error of a household appliance (110); wherein the method (300) comprises,
- determining (301) that an error of the household appliance (110) has occurred;
- providing (302) a notification (137) to a user equipment (140) of a user of the household appliance (110); wherein the notification (137) comprises a link (201) to a booking center for booking a repair intervention for repairing the household appliance (110); wherein the link (201) is a weblink to a booking website; wherein the booking website comprises at least one field that needs to be filled in when booking a repair intervention;
- determining an appliance identifier of the erroneous household appliance (110);
- determining a user identifier of the user and/or of the user equipment (140) based on the appliance identifier using an event engine (133) which comprises a mapping between a plurality of different appliance identifiers and a plurality of different user identifiers;
- determining information that is to be filled in the at least one field of the booking website; wherein the at least one field comprises an appliance field to be filled with the appliance identifier of the household appliance (110) and a user field to be filled with the user identifier; and
- generating a link (201) to the booking website which causes the at least one field to be filled automatically with the determined information.
